# EUROPEAN PATENT APPLICATION

(11) **EP 4 622 089 A1**
(43) Date of publication of application: **24.09.2025**
(21) Application number: 24382300.2
(22) Date of filing: 20.03.2024
(51) Int. Cl.: H02M 7/5387, H02M 7/5395, H02M 7/493, H02M 1/00, H02P 27/08

(54) **DISCONTINUOUS PWM POWER CONVERTER OPERATION**

(71) Applicant: Gamesa Electric, S.A. Unipersonal, 48170 Zamudio (ES)
(72) Inventor: The designation of the inventor has not yet been filed
(74) Representative: SGRE-Association

(57) **Abstract**

A method of controlling the operation of a power converter system is provided. The power converter system (10) may comprise at least a first power converter (11) and a second power converter (21), each power converter (11, 21) having an AC side with an AC interface (30), the first and second power converters (11, 21) being electrically connected together at their AC interfaces (30). Each power converter (11, 21) may be operated with a pulse width modulation (PWM) scheme that generates a PWM signal (63, 73) based on a reference signal (61, 71). A first reference signal (61) and a second reference signal (71) are generated such that a switching discontinuity (75) in a second PWM signal (73) derived from the second reference signal (71) is aligned with a corresponding switching discontinuity (65) in a first PWM signal (63) derived from the first reference signal (61).

## Description

### FIELD OF THE INVENTION

The present invention relates to a method of controlling the operation of a power converter system, such as a power converter system for coupling a battery system to a grid or a wind turbine power converter system. It further relates to a respective control system, in particular for a wind turbine, and to a respective computer program.

### BACKGROUND

Power converters are used in many applications, including motor drives and the conditioning of generated electrical power for being fed into a power grid. For example, power converters are employed in power conversion systems for energy storage devices, in wind turbines in a full converter topology or a doubly fed induction generator (DFIG) topology, or in other applications in order to control the power generation and to synchronize the generated electrical power with the power grid. To increase the power conversion capability, power conversion systems are employed in which plural power converters are connected in parallel.

Often, it is desirable to operate such parallel single-phase or multi-phase converters at different operating points, as they may have different power setpoints or different voltage levels at the input or output. Accordingly, the different operating points may result in different modulating or reference signals for each converter. The power electronic switches of such power converter are often driven by pulse width modulation (PWM) signals, providing respective gate signals. PWM signals are often generated by comparing the reference signal (typically a voltage reference v_{ref}) to a carrier signal, e.g. a triangular or sawtooth signal.

The parallel connection of the power converters may result in the generation of noise. In particular, the operation of parallel power converters using a discontinuous pulse width modulation scheme may result in the generation of significant differential and common mode noise.

To mitigate such problems, other modulation techniques are generally employed. Further, the output of parallel converters may be coupled to different windings of a transformer so that they are not electrically connected. However, such configurations limit the possible implementations and may result in the loss of advantages associated with discontinuous PWM. As another solution, common mode filters can be added to the output of the parallel power converters. This may however require inductances and capacitors of large value, resulting in increased size, weight, and cost of the power converter system.

### SUMMARY

Accordingly, there is a need to mitigate at least some of the drawbacks mentioned above and to provide an improved operation of such power converter system. In particular, there is a need for a solution that allows operating parallel connected power converters in a discontinuous PWM scheme with acceptable noise.

This need is met by the features of the independent claims. The dependent claims describe examples of the invention.

According to an aspect of the invention, a method of controlling the operation of a power converter system is provided. The power converter system comprises at least a first power converter and a second power converter, each power converter having an AC side with an AC interface. The first and second power converters are electrically connected together at their AC interfaces. Each power converter is operated with a pulse width modulation (PWM) scheme to convert electrical power exchanged via its respective AC interface. The PWM scheme generates a PWM signal for controlling switches of the power converter based on a reference signal. Each power converter is operable with a different reference signal corresponding to a different operating point of the power converter. The method comprises generating a first reference signal for the first power converter according to a first operating point of the first power converter and generating a second reference signal for the second power converter according to a second operating point of the second power converter. The first reference signal and the second reference signal are generated such that a switching discontinuity in a second PWM signal derived from the second reference signal is aligned with a corresponding switching discontinuity in a first PWM signal derived from the first reference signal. The method further comprises operating the power converter system using the first and second PWM signals derived from the first and second reference signals.

By such generation of the reference signals that align the switching discontinuities in the PWM signals, differential mode noise and common mode noise that may be generated when the PWM signals are produced in the conventional way may be avoided. The different operating points may in particular result in rather different reference signals, e.g. due to a different setpoint or a different input voltage. The discontinuities in such reference signals that generate the switching discontinuities in the PWM signals may therefore be different in time (offset and duration), so that periods of discontinued switching may not fully overlap of the first and the second power converters that are connected together. This may result in significant distortions. By aligning the switching discontinuities of the PWM signals when generating the first and second reference signals, such situations may be avoided so that such disturbances may be reduced and resulting noise may be suppressed.

Further, such method may allow the operation of parallel power converters with discontinuous PWM schemes and acceptable output noise levels without the need to couple the power converter outputs to different transformer or generator windings and without the need for large filters, such as common mode and/or differential mode filters. Accordingly, a parallel converter topology may benefit from the advantages provided by using a discontinuous pulse width modulation (DPWM) scheme. By providing a switching discontinuity in the PWM signal, switching losses may be reduced. For a defined value of switching losses, an effective switching frequency may be increased when using DPWM, which may reduce harmonics in the power converter output and thus allows a reduction of filtering requirements. DPWM may reduce the harmonic frequencies compared to some continuous methods. By allowing the use of DPWM with parallel power converter topologies and acceptable noise levels, several advantages may thus be achieved.

A switching discontinuity in the PWM signal may for example be present if the PWM signal causes the switches to stop switching for more than one switching cycle, e.g. for at least 2, 3, or more switching cycles. For example, the PWM signal may be kept in high or low state for more than one switching cycle or switching period. This may be termed discontinuous modulation. It may be caused by the respective reference signal being clamped to a maximum/minimum value. Such switching discontinuity may also be caused by the reference signal exceeding the carrier signal (overmodulation).

An operating point of a power converter may for example be defined by a setpoint for the power converter operation (e.g., P*, Q*) and/or by an obtainable operating parameter of the power converter (e.g., a DC voltage level measured on a DC side of the power converter).

At least in some operating states of the power converter system, the first operating point may be different from the second operating point. The method may thus allow maintaining different operating points of the connected power converters while providing alignment between the PWM switching discontinuities.

The PWM signals may also be termed gate signals, as they may be used to control the driving of the gates of semiconductor switches of the respective power converter, such as IGBTs or the like.

The method may comprise the steps of deriving the first PWM signal from the first reference signal and the deriving of the second PWM signal from the second reference signal, wherein such deriving may comprise the comparison of the respective reference signal to a respective carrier signal (for example, a triangular or sawtooth carrier signal).

The AC interface of each power converter may be an AC input or AC output, or for a bi-directional power converter may be operated as an input or an output, depending on the direction of power flow. An AC input and/or output terminal of the first power converter may be electrically connected to an AC input and/or output terminal of the AC interface of the second power converter. The AC interfaces of the first and second power converters may be connected in parallel to provide a parallel power flow through the at least two power converters.

The first and second power converters may in particular be coupled in parallel so as to provide parallel power flow paths between an electrical power source, e.g. a generator or solar cell, and a load, e.g. a power grid, an electric machine, etc.. Each power converter may be part of or may be a back-to-back power converter (AC-AC converter) providing one- or bi-directional power conversion.

In such configuration, AC interfaces at the other side of the power converter may be connected together to provide an electrically parallel connection of the at least two power converters, or may be connected to different windings of a generator or transformer to provide a parallel path for the power flow. The first and second power converters may thus be coupled in parallel, by a direct or indirect coupling at the other side of the power converters.

In other examples, the other side of the power converters may be coupled to different power sources or power sinks, e.g. to a DC power source such as a photovoltaic power source.

The at least first and second power converters may be one phase or three phase power converters. A respective reference signal and PWM signal may be generated for each phase. The alignment may occur between the corresponding phases of the at least two power converters. The reference signals for different phases are generally offset by 120 degrees in such three phase system. Other configurations with more or fewer phases are also possible. It should be clear that the description provided herein relates to one phase, and that the respective generation and alignment of the PWM signal may occur correspondingly for each other phase of the system.

Each power converter may be a two level power converter, but may also be implemented as a multilevel power converter (e.g. a three level power converter). Each power converter may be operated as a voltage source converter (VSC), or as a current source converter. Each power converter may for example be a two level voltage source converter (2L VSC).

In an example, the first reference signal may have at least one first signal feature that generates the discontinuity in the first PWM signal and the second reference signal may have at least one second signal feature that generates the switching discontinuity in the second PWM signal, wherein aligning the switching discontinuity in the second PWM signal with the switching discontinuity in the first PWM signal comprises aligning or synchronizing the first signal feature of the first reference signal with the second signal feature of the second reference signal. Such alignment or synchronization of reference signal features may allow the reduction of unwanted differential mode and/or common mode noise while enabling operating of the first and second power converters at different operating points.

Alignment or synchronization may for example be performed by aligning a center of the respective feature of both reference signals (e.g. a center of the time period over which the feature lasts, a center of a peak, or the like), by aligning a starting point of the respective feature of both reference signals (e.g. a rising flank or the exceeding of a particular signal value), or by aligning an end point of the respective feature of both reference signals (e.g. a falling flank or the dropping below a particular signal value). It should be clear that if the extension of the respective features in the first and second reference signals (e.g. their time period) is similar or the same, the start point, the center, and the end point may all be aligned simultaneously. If the extension must be different and cannot be modified, only one of these may be aligned. These definitions apply correspondingly to the alignment of the switching discontinuities of the first and second PWM signals.

Alignment or synchronizing may preferably be performed such that the respective features in the first and second reference signals occur (substantially) simultaneously.

The method may further comprise selecting one of the first and second reference signals as a master signal and aligning the signal feature of the other reference signal (and optionally the signal features of further other reference signal(s) of further power converter(s)) with the signal feature of the selected master signal. This may facilitate the alignment, as the master signal may not have to be modified. Further, the respective converter may be allowed to operate with an optimally generated reference signal.

The selection of the master signal may be made in dependence on the operating points of the first and second power converters. This selection may occur automatically. As the operating point affects the reference signal, the consideration of the operating points may allow selecting the power converters for adjustment of the reference signal to provide said alignment of signal features such that an overall improved performance of the converter system results.

The first and second signal features may each comprise one or a combination of: a clamp period during which the respective reference signal is clamped to a maximum or minimum signal value; a clamping event; an unclamping event; a discontinuity of the respective reference signal; and a period of the respective reference signal in which the respective reference signal exceeds (in positive or negative direction) a carrier signal from which the respective PWM signal is generated. The signal feature in the respective reference signal may for example correspond to a clamping of the AC interface of the respective power converter to a positive or a negative phase of a DC bus at the other side of the respective power converter. Such clamping or such exceeding of the carrier signal may generate a period of time during which the derived PWM signal does not comprise switching pulses (i.e. the respective switching discontinuity), so that switching losses are reduced. By aligning such camping period or period of exceeding the carrier signal, noise may be reduced in the converter system output as described above. A clamping event may be indicated in the respective reference signal by a signal flank that leads up to the clamping period. An unclamping event may be indicated in the respective reference signal by a signal flank at which the clamping period ends.

If the clamping periods have a different duration, it may be advantageous to align either the respective clamping events, to align the respective unclamping events, or to align the centers of the clamping periods.

At least some of the signal parts of the first and second reference signals may differ. This may allow generation of first and second reference signals in which the respective signal features are aligned (in particular have the same timing, e.g. of clamping and unclamping events) while remaining parts of reference signal can differ. Thereby, the power converters can be operated at different operating points. In other words, the operating points may be different and may result in unequal and/or non-synchronous first and second reference signals, in which the above-mentioned signal features are however aligned.

The first reference signal may be generated to comprise the at least one first signal feature and to operate the power converter at the first operating point and the second reference signal may be generated to comprise the at least one aligned or synchronized second signal feature and to operate the power converter at the second operating point that is allowed to differ (or is different) from the first operating point.

In a preferred example, each of the first and second reference signals may be produced by combining a respective first or second continuous reference signal generated for the respective operating point of the power converter with a respective first or second discontinuous modulating signal to thereby generate one or more discontinuous signal features in the respective first or second reference signal. These discontinuous signal features may be a particular implementation of the above-mentioned signal features, so that all of the above explanations apply. Different types of discontinuous PWM (DPWM) exist, and any of these may be employed here. Use of DPWM may reduce switching losses and may increase the quality of the power output by the converter system. It may further result in a reduced need for filtering and may thus allow the reduction of size and cost for filtering devices, such as inductors and capacitors.

Aligning the switching discontinuity in the second PWM signal with the switching discontinuity in the first PWM signal may comprise synchronizing the second discontinuous modulating signal with the first discontinuous modulating signal for generating the first and second reference signals. Such method may be beneficial in that the discontinuities are generated at the same points in time in the first and second reference signals, while the continuous reference signals and thus the operating points of the first and second power converters are allowed to differ. In particular, the remaining parts of the generated first and second reference signals (i.e. other than the discontinuities therein) may be allowed to differ to achieve the respective first and second operating points.

The method may further be simplified by employing the same discontinuous modulating signal for generating the first reference signal and the second reference signal. Each power converter may be operated with the same discontinuous modulating signal and with a different (e.g. non-synchronous) continuous reference signal. Providing a synchronization of the discontinuities in the first and second reference signals may thereby be facilitated.

The method may provide particular benefits if the first continuous reference signal is allowed to be (or is) non-synchronous to the second continuous reference signal, for example during at least some operating states of the power converter system. A high level of output noise usually present during such operation may be avoided. During such operation, for at least one of the power converters, the discontinuous modulating signal may be non-synchronous with the continuous reference signal when generating the reference signal therefrom. Non-synchronous may mean that zero crossings or extremes occur at different points in time.

There may accordingly be a tradeoff between the avoidance of noise by synchronizing of the discontinuous modulating signals and the non-optimal generation of the reference signals, e.g. due to timing differences between the discontinuous modulating signal and the continuous reference signal. However, it has surprisingly been found that although some of the employed reference signals may be non-optimal, the overall performance and output quality of the power converter system may be improved.

The discontinuous modulating signal may be a zero sequence signal. In particular for a three phase converter feeding a three phase load, a degree of freedom exists in determining the duty cycle of the converter switches. An injection of such zero sequence signal may thus not change the operating point of the power converter.

The discontinuous modulating signal may for example be configured to modulate the continuous reference signal in accordance with at least one of a DPWM1, DPWM2, DPWM3, DMIN, or DMAX discontinuous modulation scheme, or any other scheme operating under overmodulation. DPWM1-DPWM3 are modulation schemes known to the skilled person and are thus not explained in greater detail here. Any other modulation scheme that results in a switching discontinuity in the PWM signals may be employed as well.

The alignment of the switching discontinuity in the PWM signals may in particular be performed such that the operating point of the respective power converter is not changed. The first and second reference signals with the aligned switching discontinuity may be adapted to operate the respective first or second power converter at the same first or second operating point as corresponding first and second reference signals without the alignment. In other words, the generation of the first and second reference signals may be performed such that the first and second operating points of the first and second power converters are retained by the alignment of the discontinuities of the first and second PWM signals, respectively. The same setpoints as without synchronization of the second discontinuous modulating signal with the first discontinuous modulating signal may for example be retained. Noise reduction may thus be achieved while maintaining the operating point of the power converter system.

In an exemplary implementation, each power converter may have a second side, the power converter providing power conversion between the AC side and the second side, which may be a further AC side or a DC side. For example, each power converter may have an AC or DC interface coupled to an AC or DC bus, respectively, wherein each power converter may be coupled to a different AC or DC bus. The method may thus provide noise reduction even though the different power converters of the system may operate on different AC or DC voltages on their second side, which may result in rather different operating points.

Each signal period of each of the first and second reference signals may have a first clamped period during which the reference signal value is clamped to a maximum signal value and a second clamped period during which the reference signal value is clamped to a minimum signal value, wherein the first clamped period and the second clamped period of the first and second reference signals are respectively aligned to provide said alignment of the discontinuities of the first and second PWM signals.

The converter system may comprise more than two power converters, e.g. 3, 4, 5 or more, which may be configured correspondingly, and which may be operated similar to the first and second power converters. Each of these power converters may have a respective AC interface that is electrically connected to the AC interfaces of the other power converters. The method may generate a reference signal for each such further power converter in any of the above described ways so as to align the switching discontinuities in each of the PWM signals of the power converters of the power converter system.

The power converter system may be a power converter system of a wind turbine and may be configured to convert electrical power generated by an electrical generator of the wind turbine. In another example, the power converter system may convert electrical power generated by one or more solar power panels or other renewable energy sources. In a preferred example, the power converter system may be configured to provide conversion of electrical power for respective energy storage devices, such as batteries. Each power converter may for example be coupled or connected to a (different) energy storage device. Each power converter may for example be connected to a different battery or battery system and provide power conversion therefor. Each power converter may for example provide bidirectional AC-DC power converter.

According to another aspect of the present invention, a control system for controlling the operation of a power converter system is provided. The power converter system comprises at least a first power converter and a second power converter, each power converter having an AC side with an AC interface, the first and second power converters being electrically connected together at their AC interfaces. Each power converter is operated with a pulse width modulation (PWM) scheme to convert electrical power exchanged via the AC interface. The PWM scheme generates a PWM signal for controlling switches of the power converter based on a reference signal. Each power converter is operable with a different reference signal corresponding to a different operating point of the power converter. The control system is configured to perform the method in accordance with any of the aspects and examples disclosed herein.

A system comprising such control system and a respective power converter system may be provided.

For example, an energy storage system comprising such control system and a respective power converter system may be provided. Each power converter of the power conversion system may provide power conversion between the first AC side and a second side of the power converter (e.g., AC/DC, AC/AC, DC/AC and the like). The energy storage system may further comprise plural energy storage devices (e.g. batteries or battery racks), wherein at least a first energy storage device is coupled to the second side of the first power converter and at least a second different energy storage device is coupled to the second side of the second power converter. Further power converters coupled to further energy storage devices can be comprised in the system. The system may thus allow feeding power from plural parallel energy storage devices via the power converters into a common bus (e.g. an AC bus) and/or to charge the energy storage devices from such common bus. The energy storage devices may cause the power converters to operate at different operating points, wherein by the present solution, common mode noise and differential mode noise may be reduced.

As a further example, a wind turbine comprising such control system and a respective power converter system may be provided.

According to a further aspect of the invention, a computer program for controlling the operation of a respective power converter system is provided. The computer program comprises control instructions which, when executed by a processing unit of a control system that controls the operation of the power system, cause the processing unit to perform the method in accordance with any of the aspects and examples disclosed herein. Such computer program, in particular the respective control instructions, may be provided on a volatile or nonvolatile storage medium or data carrier, and/or may be provided via a communication connection, such as a wired or wireless network connection.

By such control system, energy storage system, wind turbine, or computer program, advantages may be achieved that correspond to the advantages outlined further above with respect to the method.

It is to be understood that the features mentioned above and those yet to be explained below can be used not only in the respective combinations indicated, but also in other combinations or in isolation, without leaving the scope of the present invention. In particular, the features of the different aspects and examples of the invention can be combined with each other unless noted to the contrary.

### BRIEF DESCRIPTION OF THE DRAWINGS

The forgoing and other features and advantages of the invention will become further apparent from the following detailed description read in conjunction with the accompanying drawings. In the drawings, like reference numerals refer to like elements.
Fig. 1 is a schematic drawing showing a control system for a power converter system according to an example of the invention.
Fig. 2 is a schematic drawing showing a power converter system with plural power converters having connected AC interfaces which may be operated in accordance with an example of the invention.
Fig. 3 is a diagram schematically illustrating the generation of a PWM signal from a reference signal and a carrier signal.
Fig. 4 is a diagram schematically illustrating the generation of a PWM signal from a reference signal and a carrier signal with overmodulation and the resulting switching discontinuities.
Fig. 5 is a diagram schematically illustrating the generation of a PWM signal from a reference signal and a carrier signal using discontinuous PWM.
Fig. 6 is a diagram schematically illustrating differences in discontinuous reference signals and resulting PWM signals for two power converters operating at different operating points.
Fig. 7 is a schematic drawing illustrating the generation of PWM signals according to an example of the invention.
Fig. 8 is a diagram schematically illustrating different discontinuous reference signals and resulting PWM signals for two power converters operating at different operating points, wherein the clamping periods in the reference signals and the switching discontinuities in the PWM signals are aligned according to an example of the invention.
Fig. 9 is a flow diagram illustrating a method according to an example of the invention.

### DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

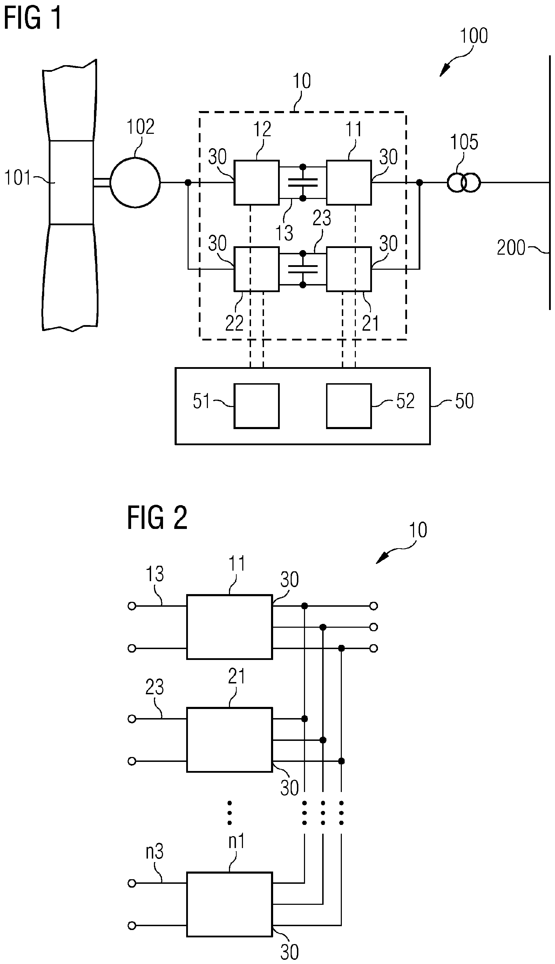

Fig. 1 schematically illustrates a wind turbine 100 having a wind turbine rotor 101 and a generator 102 that converters mechanical power into electrical power. A converter system 10 conditions the generated electrical power for being fed via a wind turbine transformer 105 into a power grid 200, such as a collector grid or utility grid. Figure 1 illustrates a full converter topology in which all generated electrical power passes through the power converter system 10, but other topologies may be employed, such as a DFIG topology in which only a fraction of the generated electrical power passes through the power converter system 10. Power converter system 10 comprises a first power converter 11 and a second power converter 21, each having an AC interface 30 at which the power converters are electrically connected together. It further comprises a further first power converter 12 and a further second power converter 22, which are electrically connected together at their AC interfaces 30. Power converters 11, 12 further have an DC interface at which they are connected together with a DC bus 13, so that they form a back-to-back AC-AC power converter. Power converters 21, 22, likewise comprise a DC interface via which they are connected via a DC bus 23 to form a back-to-back power converter. Power converter system 10 may be bi-directional, so that AC interface 30 can operate as a converter input or converter output for each of converters 11, 12, 21, 22. Figure 1 shows the converter system 10 having two parallel connected back-to-back power converters. In other examples, the power converter system 10 may comprise further parallel connected back-to-back power converters. In other examples, the AC interfaces of power converters 11, 21 may be connected to different windings of the transformer 105, or the AC interfaces of power converters 12, 22 may be connected to different windings of the generator 102, thus providing a parallel power flow path.

The power converters are controlled by a control system 50. Control system 50 may comprise a converter controller that operates in accordance with a pulse width modulation scheme. It may further comprise a wind turbine controller that provides setpoints to such converter controller. Control system 50 may comprise a processing unit 51 and a memory 52. Processing unit 51 may comprise any kind of processor, such as a microprocessor, an application-specific integrated circuit, a field-programmable gate array, a digital signal processor and the like. Memory 52 may comprise any kind of memory, such as RAM, ROM, EEPROM, Flash Memory, a hard-disk drive and the like. Control system 50 may comprise further components common to a computer system, such as respective input/output interfaces, a data communication bus for interconnecting the different components, and a user interface. Memory 52 may store control instructions to be executed by processing unit 51. Such control instructions may be configured to cause the control system 50 to perform any of the methods described herein. Processing unit 51 and memory 52 may be distributed across plural controllers, such as a converter controller and a wind turbine controller.

Fig. 2 illustrates a further example in which a power converter system 10 comprises power converters 11, 21, ... n1 which are electrically connected at their AC interfaces 30. Fig. 2 illustrates three AC phases as an example, and the power converter system 10 of Fig. 1 may likewise be a three phase system. The other side of power converters 11, 21, ..., n1 is connected to separate and distinct DC busses 13, 23, ... n3. The DC busses may likewise form part of a DC link of a back-to back converter, but may in other examples be connected to a DC power source, such as a photovoltaic power source or energy storage device, in particular a battery. In other implementations, power converter system 10 may form part of a drive and may thus receive electrical power via the DC interfaces to drive an electrical machine coupled to the connected AC interfaces 30.

In any such configuration of the power converter system 10, the parallel electrical connection of AC interfaces 30 may result in the generation of common mode noise and differential mode noise, in particular if the power converters 11, 21, ... n1 operate at different operating points, e.g. due to the presence of different DC voltages on the DC busses 13, 23, ... n3 and/or different power setpoints. For example, such noise may be generated if one power converter switches to high while another power converter switches to low. This may for example occur if periods of time during which no switching occurs for several switching cycles (switching discontinuity) are only partially overlapping. Such noise may be avoided in accordance with the examples disclosed herein.

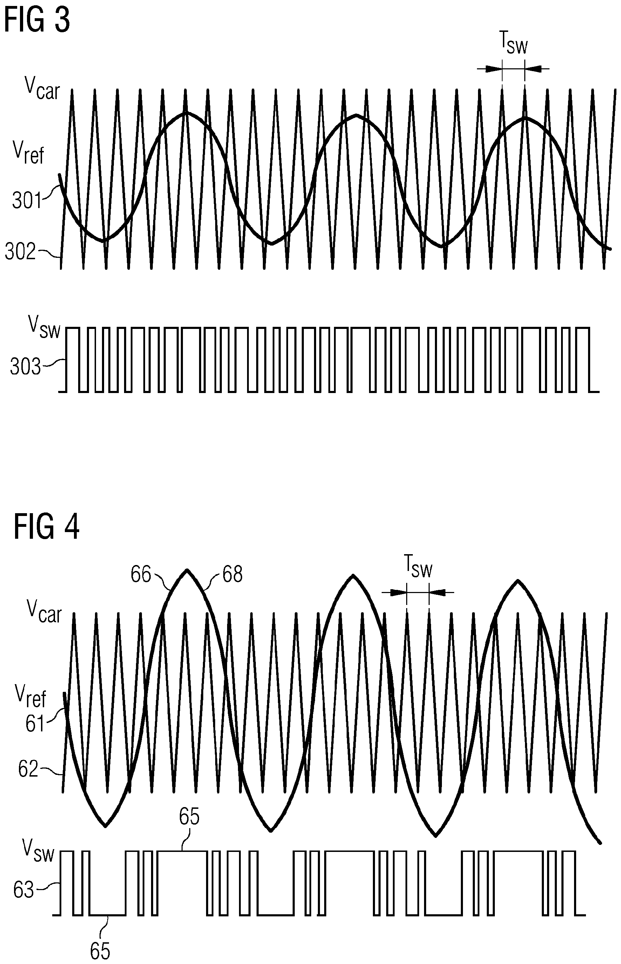

Each power converter may be operated using a PWM scheme. The differences in the operating conditions may result in a different reference signal (reference voltage v_{ref}) for each converter. As shown in Fig. 3, the reference signal v_{ref} 301 that allows controlling the current and voltage at the output of the converter is compared to a carrier signal v_{car} 302 to derive the pulse with modulated signal v_{sw} 303. The carrier signal may be triangular, sawtooth shaped or the like. The carrier signal may define the switching period T_{sw}, and thus how many times per second the switches are operated. T_{sw} may be variable or not. The PWM signal 303 is high if the reference signal 301 is above the carrier signal 302 and low if the reference signal 301 is below the carrier signal 302. In the example of Fig. 3, the reference signal 301 has a sinusoidal waveform (SPWM), which is the simplest alternative found in the state of the art.

To improve converter performance, an advanced modulation technique may be implemented. Such technique may be based on complex reference waveforms that provide some advantages, such as higher efficiency or capacitor balancing, e.g. in a multilevel converter. In examples, a reference waveform may be employed that has discontinuities or may cause overmodulation. Although discontinuities and overmodulation are different techniques, both may result in that one pair of switches of the power converter stops switching for more than one switching cycle (i.e. more than one switching period T_{sw}). This may be referred to as "discontinuous modulation" and may result in a switching discontinuity. An example is shown in Fig. 4, wherein the reference signal 61 exceeds the carrier signal 62 during an overmodulation period 68 for more than one switching cycle. The overmodulation period 68 is a signal feature 66 that results in the switching discontinuities 65 in the PWM signal 63, during which the PWM signal is set to high or low for more than one switching cycle (for more than one switching period).

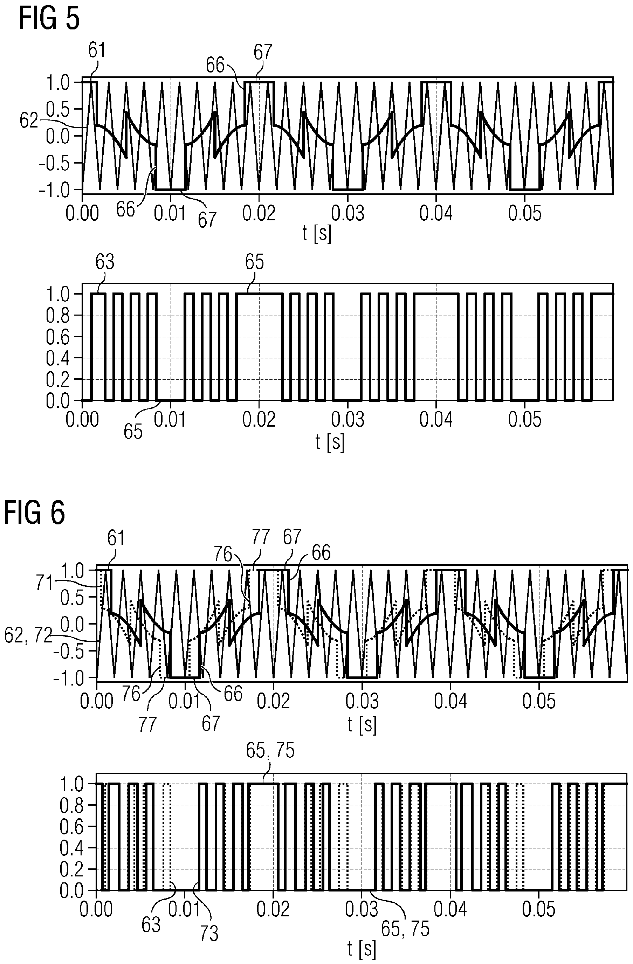

Switching discontinuities may also be introduced by using discontinuous modulation, such as DPWM1. An example is shown in Fig. 5, wherein the reference signal 61 is a discontinuous reference signal, which may be generated by injecting a zero sequence signal comprising respective discontinuities. The reference signal 61 of Fig. 5 comprises several (discontinuous) signal features 66, including the clamp periods 67. During clamp periods 67, the reference signal is clamped to a maximum or minimum value. The duration of such clamp period may be 60 degrees (if the full signal period (full fundamental cycle) of reference signal 61 is considered to correspond to 360 degrees). The clamp periods 67 result in corresponding switching discontinuities 65 in the PWM signal 63 during which switching is avoided, which may reduce switching losses. Due to the clamp periods 67, the reference waveform v_{ref} shows discontinuities or sudden jumps, which may result in discontinuities in the gate signals of the semiconductor switches of the power converter.

Each clamp period may have a first signal flank (clamping event) at the start of the clamp period and a second signal flank (unclamping event) at the end of the clamp period. Such clamping event and/or unclamping event may likewise constitute a signal feature 66.

When the AC interfaces of two or more power converters are electrically connected, as shown for, e.g., converters 11 and 21 in Fig. 1 or 2, significant differential and common mode noise may be generated. As an example, two converters using DPWM1 modulation with different operating points (setpoints and/or input DC voltages) may be considered with a single common AC output. This difference in operating points may give rise to the reference signals 61 and 71 shown in Fig. 6. The discontinuous signal features 66, 76 and in particular the clamp periods 67, 77 occur at different times in both reference signals 61, 71 because of the different operating points of power converters 11, 21. In other words, the clamp periods 67, 77 are not fully overlapping. As a result, the switching discontinuities 65, 75 in the PWM signals 63, 73, which are generated from the respective reference signals 61, 71, do likewise not fully overlap. As can be seen, the PWM signal 61 for, e.g., converter 11 may be set to high during a switching pulse while the PWM signal 73 experiences a switching discontinuity 75 during which it is set to low. Noticeable differential and common mode noise may thus be generated.

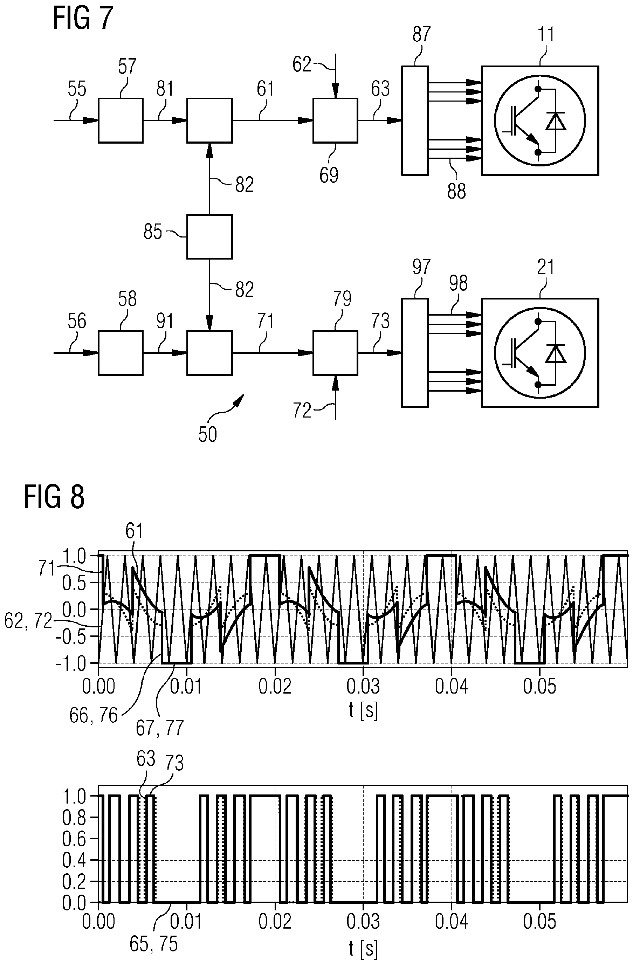

Figs. 7 and 8 illustrate an example of the invention in which such noise generation is reduced significantly. The above explanations regarding the generation of the PWM signals apply correspondingly. Fig. 7 illustrates functional components of the control system 50. The power converter 11 is to be operated according to an operating point 55 and the power converter 21 is to be operated according to a operating point 56. The operating points may comprise different setpoints, different DC link voltages (which may be monitored) and the like. The AC sides of the power converters 11, 21 are connected together, as shown in Figs. 1 and 2. The converter controller part 57 generates a continuous reference signal 81 for the operating point 55 for converter 11. The converter controller part 58 generates a continuous reference signal 91 for the operating point 56 for converter 21. The reference signals 81, 91 for the different operating points 55, 56 may generally differ.

In order to reduce the differential mode and common mode noise, the signal features 66, 76 of the reference signals that correspond to the switching discontinuities 65, 75 in the PWM signals are aligned or synchronized. This may occur in different ways. Preferably, the signal features 66, 76 correspond to the clamp periods 67, 77, and the clamp periods of reference signals 61, 71 may be synchronized. Clamping of the signals of the same phase of the paralleled converters 11, 21 may thus be made simultaneous, or may at least occur with as little difference as reasonably possible.

There are various ways in which the signal features of the reference signals 61, 71, in particular the discontinuities or clamps, may be synchronized. It may for example occur by modifying the reference signals of each power converter. A result of such synchronization of signal features 66, 76 is shown in Fig. 8. As can be seen, the discontinuities and in particular the clamp periods 67, 77 of the reference signals 61, 71 are synchronized, resulting in an alignment of the switching discontinuities 65, 75 of the PWM signals 63, 73. As a consequence, the differential and common mode noise that results when using the PWM signals 63, 73 of Fig. 6 can be avoided by the alignment of the discontinuities in Fig. 8.

By causing the clamp periods 67, 77 of the reference signals 61, 71 to be aligned and to occur substantially simultaneously, the remaining parts of the reference signals 61, 71 may be modified and may in particular be different so as to achieve the different operating points of power converters 11, 21. This becomes readily apparent when comparing the other parts of reference signals 61, 71 shown in figure 8.

If the AC interfaces 30 of one or more further power converters are connected to power converters 11, 21, as indicated in Fig. 2, the signal features (e.g. discontinuities) in the respective reference signals may be aligned or synchronized in a similar way. For example, the reference signal of one power converter may be taken as a reference (or master signal), and the signal features, e.g. clamp period, of the remaining reference signals may be aligned with the corresponding signal features of such master signal.

If the discontinuities are not perfectly synchronized, some differential and common mode noise may remain. However, if the time delay between the discontinuities is short enough, such noise may be insignificant and/or may be easy to filter and/or suppress, resulting in a solution with only little noise but increased efficiency.

Turning back to Fig. 7, a particular example of how such alignment of signal features of reference signals 61, 71 may be achieved is illustrated. The reference signals 61, 71 may be generated by combining the continuous reference signals 81, 91 with a discontinuous modulation signal, which may for DPWM1 result in reference signals corresponding to those shown in Fig. 6 and having clamp periods 67, 77. Such discontinuous modulation signal may be a zero-sequence signal that does not change the operating point of the power converter. In conventional DPWM1, such zero sequence signal is synchronized with the continuous reference signal, resulting in the symmetrical discontinuous reference signal 61 or 71 shown in Fig. 6.

To align the signal features 66, 76, in particular the clamp periods 67, 77, the discontinuity synchronizing unit 85 may inject the same discontinuous modulation signal 82 for each power converter. The discontinuity synchronizing unit 85 may comprise a zero sequence generator. The combination with the continuous reference signals 81, 91 results in the discontinuous reference signals 61, 71. As can be seen in Fig. 8, the reference signal 71 is essentially unchanged and remains symmetrical. The reference signal 61 however becomes unsymmetrical and the shape differs significantly from the conventional DPWM1 signal shape shown in Figs. 5 and 6. The reason is that for the different operating points 55, 56, the discontinuous modulation signal 82 can only be aligned with one of the continuous reference signals 81, 91. In the resulting discontinuous reference signals 61, 71, the clamp periods 67, 77 are aligned while the remaining signal parts differ as a consequence of the different operating points. In other examples, the discontinuity synchronizing unit 85 may be implemented in different ways and may perform an alignment of discontinuities in the reference signals 61, 71 in a different way.

The comparators 69, 79 generate by a comparison of the respective reference signal 61, 71 with a corresponding carrier signal 62, 72 the PWM signals 63, 73. The carrier signals 62, 72 may be the same signal. As can be seen in Fig. 8, the switching discontinuities 65, 75 in the PWM signals 63, 73 are aligned due to the alignment of the clamp periods 67, 77 in reference signals 61, 71. On the other hand, each PWM signal 63, 73 still operates the associated power converter 11, 21 at the respective operating point 55, 56. The PWM signals 63, 73 may be provided to respective gate drivers 87, 97 that provide corresponding gate drive signals 88, 98 to the semiconductor switches of the power converter 11, 21 in order to generate a corresponding converter output.

Respective PWM signals 63, 73 may correspondingly be generated for each electrical phase of the power converters 11, 21 (with the respective phase shift). As indicated above, further power converters may be parallelized with power converters 11, 21 and may be operated in a similar way.

It should be clear that this is only one possible way of generating and aligning the switching discontinuities 65, 75 of PWM signals 63, 73. In other examples, the switching discontinuities may for example be generated using a different DPWM method or using overmodulation. The reference signals may for example be modified to align the overmodulation periods 68 of the different reference signals. In other examples, different discontinuous modulation signals may be used for each power converter for generating the discontinuous reference signals 61, 71. The clamp periods 67, 77 may then later be shifted in the reference signals to provide the alignment. Other examples of providing the alignment of the switching discontinuities 65, 75 may be used; the example described with respect to figures 7 and 8 is non-limiting.

The disclosed solution is applicable to more than one power converter topology. It may be used for a two-level voltage-source-converter (2L VSC). In other examples, it may be employed with a multilevel converter topology, e.g. three-level. The inventors have successfully applied the disclosed solution on the DPWM1 modulation technique, but it may likewise be used with any other modulation scheme that generates switching discontinuities in the PWM signals.

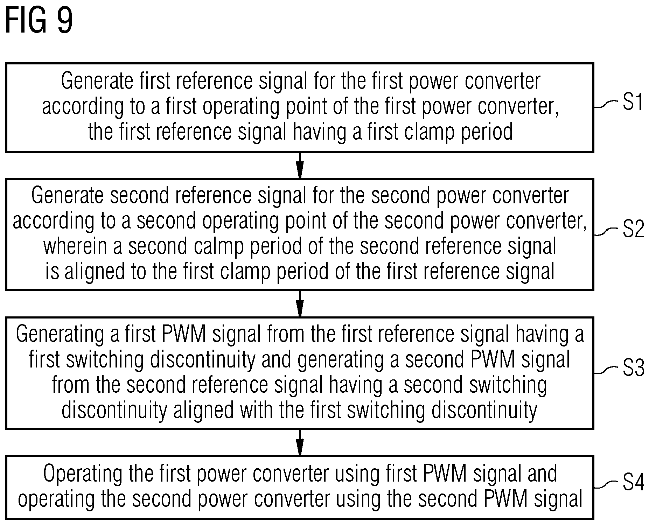

Fig. 9 is a flow diagram illustrating a method according to an example. In step S1, a first reference signal 61 for the first power converter 11 may be generated according to a first operating point 55 of the first power converter 11. The first reference signal 61 may have a first clamp period 67. In step S2, a second reference signal 71 may be generated for the second power converter 21 according to a second operating point 56 of the second power converter 21. The generation may occur such that a second clamp period 77 of the second reference signal 71 is aligned to the first clamp period 67 of the first reference signal 61.

In this example, the reference signal of the first power converter is essentially chosen as a master signal to which the signal feature(s) second reference signal is/are aligned. In other example, the signal feature(s) of the first reference signal may be aligned with the second reference signal. The method may in particular comprise an optional step prior to step 1 of choosing a reference signal of a power converter to act as a master signal to which alignment of signal features is to take place for the other reference signal(s) (slave). Such choice may for example be made in dependence on the operating point of the respective power converter (it may be made automatically by the control system).

In step S3, a first PWM signal 63 may be generated from the first reference signal 61 having a first switching discontinuity 65 and a second PWM signal 73 may be generated from the second reference signal 71 having a second switching discontinuity 75 that is aligned with the first switching discontinuity 65. The first power converter 11 may be operated using the first PWM signal 63 and the second power converter 21 may be operated using the second PWM signal 73 (step S4). By such operation, due to the alignment of the switching discontinuities 65, 75, common mode noise and/or differential mode noise in the output of the power converters 11, 21 may be reduced, as explained in detail above. The method may be performed in any of the above-described ways. The control system 50 described above may be configured to carry out the method.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method of controlling the operation of a power converter system, wherein the power converter system (10) comprises at least a first power converter (11) and a second power converter (21), each power converter (11, 21) having an AC side with an AC interface (30), the first and second power converters (11, 21) being electrically connected together at their AC interfaces (30), wherein each power converter (11, 21) may be operated with a pulse width modulation, PWM, scheme to convert electrical power exchanged via the AC interface (30), wherein the PWM scheme generates a PWM signal (63, 73) for controlling switches of the power converter (11, 21) based on a reference signal (61, 71), wherein each power converter (11, 21) is operable with a different reference signal (61, 71) corresponding to a different operating point (55, 56) of the power converter (11, 21), wherein the method comprises:
- generating a first reference signal (61) for the first power converter (11) according to a first operating point (55) of the first power converter (11);
- generating a second reference signal (71) for the second power converter (21) according to a second operating point (56) of the second power converter (21), wherein the first reference signal (61) and the second reference signal (71) are generated such that a switching discontinuity (75) in a second PWM signal (73) derived from the second reference signal (71) is aligned with a corresponding switching discontinuity (65) in a first PWM signal (63) derived from the first reference signal (61); and
- operating the power converter system (10) using the first and second PWM signals (63, 73) derived from the first and second reference signals (61, 71).

2. The method according to claim 1, wherein the first reference signal (61) has at least one first signal feature (66) that generates the switching discontinuity (65) in the first PWM signal (63) and the second reference signal (71) has at least one second signal feature (76) that generates the switching discontinuity (75) in the second PWM signal (73), wherein aligning the switching discontinuity (75) in the second PWM signal (73) with the switching discontinuity (65) in the first PWM signal (63) comprises aligning or synchronizing the first signal feature (66) of the first reference signal (61) with the second signal feature (76) of the second reference signal (71).

3. The method according to claim 2, wherein the first and second signal features (66, 76) each comprise one or a combination of: a clamp period (67, 77) during which the respective reference signal (61, 71) is clamped to a maximum or minimum signal value; a clamping event; an unclamping event; a discontinuity of the respective reference signal; and a period (68) of the respective reference signal in which the respective reference signal exceeds a carrier signal (62, 72) from which the respective PWM signal is generated.

4. The method according to claim 2 or 3, wherein at least some signal parts of the first and second reference signals (61, 71) differ.

5. The method any of the preceding claims, wherein each of the first and second reference signals (61, 71) is generated by combining a respective first or second continuous reference signal (81, 91) generated for the respective operating point (55, 56) of the power converter (11, 21) with a respective first or second discontinuous modulating signal to thereby generate one or more discontinuous signal features (66, 76) in the respective first or second reference signal (61, 71).

6. The method according to claim 5, wherein aligning the switching discontinuity (75) in the second PWM signal (73) with the switching discontinuity (65) in the first PWM signal (63) comprises synchronizing the second discontinuous modulating signal with the first discontinuous modulating signal for generating the first and second reference signals (61, 71).

7. The method according to claim 5 or 6, wherein the reference signal (61, 71) for each power converter (11, 21) is generated from the same discontinuous modulating signal (82) and from a different continuous reference signal (81, 91) .

8. The method according to any of claims 5-7, wherein the discontinuous modulating signal is a zero sequence signal.

9. The method according to any of claims 5-8, wherein for at least one of the power converters (11, 21), the discontinuous modulating signal (82) is unsynchronous with the continuous reference signal (81, 91) when generating the reference signal (61, 71) therefrom.

10. The method according to any of claims 5-9, wherein the discontinuous modulating signal is configured to modulate the continuous reference signal (81, 91) in accordance with at least one of a DPWM1, DPWM2, DPWM3, DMIN, or DMAX discontinuous modulation scheme.

11. The method any of the preceding claims, wherein the generation of the first and second reference signals (61, 71) is performed such that the first and second operating points (55, 56) of the first and second power converters (11, 21) are retained by the alignment of the switching discontinuities (65, 75) of the first and second PWM signals (63, 73), respectively.

12. The method any of the preceding claims, wherein each power converter (11, 21) further has an AC or DC interface coupled to an AC or DC bus (12, 23), wherein each power converter (11, 21) is coupled to a different AC or DC bus.

13. The method any of the preceding claims, wherein each signal period of each of the first and second reference signals (61, 71) has a first clamped period during which the reference signal value is clamped to a maximum signal value and a second clamped period during which the reference signal value is clamped to a minimum signal value, wherein the first clamped period and the second clamped period of the first and second reference signals (61, 71) are respectively aligned to provide said alignment of the switching discontinuities (65, 75) of the first and second PWM signals (63, 73).

14. A control system for controlling the operation of a power converter system, wherein the power converter system (10) comprises at least a first power converter (11) and a second power converter (21), each power converter (11, 21) having an AC side with an AC interface (30), the first and second power converters being electrically connected together at their AC interface (30), wherein each power converter (11, 21) is configured to be operated with a pulse width modulation, PWM, scheme to convert electrical power exchanged via the AC interface (30), wherein the PWM scheme generates a PWM signal (63, 73) for controlling switches of the power converter (11, 21) based on a reference signal (61, 71), wherein each power converter (11, 21) is operable with a different reference signal (61, 71) corresponding to a different operating point (55, 56) of the power converter (11, 21), wherein the control system (50) is configured to perform the method according to any one of the preceding claims.

15. A computer program for controlling the operation of a power converter system, wherein the power converter system (10) comprises at least a first power converter (11) and a second power converter (21), each power converter (11, 21) having an AC side with an AC interface (30), the first and second power converters (11, 21) being electrically connected together at their AC interface (30), wherein each power converter (11, 21) is operated with a pulse width modulation, PWM, scheme to convert electrical power exchanged via the AC interface (30), wherein the computer program comprises control instructions which, when executed by a processing unit (51) of a control system (50) that controls the operation of the power converter system (10), cause the processing unit (51) to perform the method of any one of claims 1 to 13.
